# EUROPEAN PATENT APPLICATION

(11) **EP 4 772 975 A1**
(43) Date of publication of application: **08.07.2026**
(21) Application number: 24940931.9
(22) Date of filing: 07.11.2024
(51) Int. Cl.: G06F 3/033

(54) **WEARABLE DEVICE AND TAP DETECTION METHOD THEREFOR**

(71) Applicant: Shenzhen Shokz Co., Ltd., Shenzhen, Guangdong 518108 (CN)
(72) Inventor: ZHOU, Libin, Shenzhen, Guangdong 518108 (CN); WANG, Liang, Shenzhen, Guangdong 518108 (CN)
(74) Representative: Wang, Bo
(86) International application number: PCT/CN2024/130566
(87) International publication number: WO 2026/097336

(57) **Abstract**

A wearable device and a tap detection method of the wearable device are provided. The tap detection method includes: controlling a detection module to operate at a first detection frequency to obtain a first kinematic parameter of the wearable device; in response to the first kinematic parameter satisfying a preset wake-up condition, controlling the detection module to operate at a second detection frequency to obtain a second kinematic parameter of the wearable device; and in response to the second kinematic parameter satisfying a preset tap determination condition, generating a control instruction. The second detection frequency is greater than the first detection frequency, and the second kinematic parameter and the first kinematic parameter are of the same type. The wake-up condition is set based on a kinematic response of the wearable device to a front-segment of a single tap action. The tap determination condition is set based on a kinematic response of the wearable device to a rear-segment of the single tap action.

## Description

### TECHNICAL FIELD

The present disclosure generally relates to a field of wearable devices, and in particular to a tap detection method for a wearable device and the wearable device.

### BACKGROUND

For a wearable device, a tap action is a common interaction operation. The wearable device can execute a corresponding control instruction in response to detecting the tap action of a user. In related technologies, the wearable device typically includes a detection module. The detection module performs tap detection by detecting a vibration waveform generated by the tap action. To accurately detect the vibration waveform generated by the tap action, the detection module is typically configured with a high detection frequency. However, long-term high-frequency detection results in relatively high power consumption. Therefore, how to accurately perform tap detection with relatively low power consumption becomes a technical problem that urgently needs to be solved.

### SUMMARY

One or more embodiments of the present disclosure provide a tap detection method for a wearable device. The tap detection method includes the following operations. Control a detection module to operate at a first detection frequency to obtain a first kinematic parameter of the wearable device. In response to the first kinematic parameter satisfying a preset wake-up condition, controlling the detection module to operate at a second detection frequency to obtain a second kinematic parameter of the wearable device. The second detection frequency is greater than the first detection frequency, and the second kinematic parameter and the first kinematic parameter are of the same type. The wake-up condition is set based on a kinematic response of the wearable device to a front-segment of a single tap action. In response to the second kinematic parameter satisfying a preset tap determination condition, generating a control instruction. The tap determination condition is set based on a kinematic response of the wearable device to a rear-segment of the single tap action.

In some embodiments, the wake-up condition includes: a rate of change of the first kinematic parameter over time reaching a first preset threshold, and the first preset threshold is a positive value.

In some embodiments, the tap determination condition includes: within a first preset duration, a rate of change of the second kinematic parameter over time exceeding the first preset threshold and falling back below a second preset threshold. The second preset threshold is a negative value.

In some embodiments, generating the control instruction in response to the second kinematic parameter satisfying the tap determination condition includes: generating the control instruction based on a count value of how many times the second kinematic parameter satisfies the tap determination condition within a second preset duration. Different count values correspond to different control instructions.

In some embodiments, generating the control instruction based on the count value of the second kinematic parameters that satisfy the tap determination condition within the second preset duration includes: in response to the second kinematic parameter satisfying the tap determination condition, controlling the detection module to stop operating within a third preset duration, or controlling the detection module to not respond to the second kinematic parameter obtained by the detection module.

In some embodiments, the second preset duration is within a range of 400-600 ms, and the third preset duration is within a range of 200-400 ms.

In some embodiments, after the controlling the detection module to operate at the second detection frequency to obtain the second kinematic parameter of the wearable device in response to the first kinematic parameter satisfying the preset wake-up condition, the detection method further inlcudes: in response to a continuous duration of the detection module operating at the second detection frequency reaching a fourth preset duration, controlling the detection module to operate at the first detection frequency.

In some embodiments, the first detection frequency is within a range of 200-350 Hz, and the second detection frequency is greater than or equal to 400 Hz.

In some embodiments, the detection module is an acceleration sensor. The first kinematic parameter and the second kinematic parameter are acceleration values detected by the acceleration sensor or parameters calculated based on the acceleration values.

One or more embodiments of the present disclosure provide a wearable device. The wearable device includes a processor and a memory. The memory stores a computer program. The processor is configured to execute the computer program to implement the detection method described in any one of the above.

In related art, to more accurately detect a vibration waveform generated by a tap action, the detection module needs to be configured with a high detection frequency. However, long-term high-frequency detection results in high power consumption. In the method of the present disclosure, when the first kinematic parameter satisfies the preset wake-up condition, it means that a tap action may occur. At this time, high-frequency detection is activated. Compared with the manner in the related art that continuously uses high-frequency detection, the method of the present disclosure can reduce power consumption, thereby accurately performing tap detection with lower power consumption.

In some embodiments, from a temporal perspective, a single tap action includes a front-segment and a rear-segment. In the method of the present disclosure, the wake-up condition is set based on the kinematic response of the wearable device to the front-segment of the single tap action. The tap determination condition is set based on the kinematic response of the wearable device to the rear-segment of the single tap action. That is, in the method of the present disclosure, the wearable device can activate high-frequency detection based on the kinematic response of the single tap action and complete the tap determination.

Since activating high-frequency detection and tap determination may be completed based on the kinematic response of the single tap action, when a user performs a "single tap" on the wearable device, the wearable device may detect the "single tap" and execute a first control instruction corresponding to the "single tap". When the user performs a "double tap" on the wearable device, the wearable device may also detect the "double tap" and execute a second control instruction corresponding to the "double tap", where the second control instruction and the first control instruction may be used to perform different controls on the wearable device. In the method of the present disclosure, different count values of taps may be set to correspond to different control instructions, thereby achieving more control functions through tap actions and improving the user experience of interacting with the wearable device.

### BRIEF DESCRIPTION OF THE DRAWINGS

To more clearly illustrate the technical solutions in the embodiments of the present disclosure, the following briefly describes the accompanying drawings required for describing the embodiments. Obviously, the accompanying drawings in the following description show merely some embodiments of the present disclosure, and a person of ordinary skill in the art may derive other drawings from these accompanying drawings without creative efforts, where:
FIG. 1 is a schematic diagram illustrating a state of a wearable device worn on an ear of a wearer according to some embodiments of the present disclosure;
FIG. 2 is a flowchart of an exemplary process of a tap detection method for a wearable device according to some embodiments of the present disclosure;
FIG. 3 illustrating a kinematic parameter of a wearable device changing over time according to some embodiments of the present disclosure;
FIG. 4 is a flowchart of an exemplary process for tap detection for a wearable device according to another embodiment of the present disclosure; and
FIG. 5 is a schematic diagram illustrating a wearable device according to some embodiments of the present disclosure.

### DETAILED DESCRIPTION

The present disclosure is further described in detail below with reference to the accompanying drawings and embodiments. It is specifically pointed out that the following embodiments are only used to illustrate the present disclosure, but do not limit the scope of the present disclosure. Similarly, the following embodiments are only some embodiments of the present disclosure rather than all embodiments. All other embodiments obtained by a person of ordinary skill in the art based on the embodiments of the present disclosure without creative efforts shall fall within the protection scope of the present disclosure.

The "embodiments" in the present disclosure means that specific features, structures, or characteristics described in conjunction with the embodiments can be included in at least one embodiment of the present disclosure. The phrase appearing in various positions in the specification does not necessarily refer to the same embodiment, nor is it an independent or alternative embodiment that is mutually exclusive with other embodiments. Those skilled in the art may explicitly and implicitly understand that the embodiments described in the present may be combined with other embodiments.

In the present disclosure, the terms "first", "second", and "third" are used for descriptive purposes only, and cannot be understood as indicating or implying relative importance or implicitly indicating the quantity of the indicated technical features. Thus, features defined with "first", "second", and "third" may explicitly or implicitly include at least one such feature. In the description of the present disclosure, the meaning of "a plurality of" is at least two, for example, two, three, etc., unless otherwise explicitly and specifically defined. All directional indicators (such as up, down, left, right, front, back, etc.) in the embodiments of the present disclosure are only used to explain the relative positional relationship, movement, etc. between various components in a specific posture (as shown in the drawings). If the specific posture changes, the directional indicators will also change accordingly. In addition, the terms "include" and "have" and any variations thereof are intended to cover a non-exclusive inclusion. For example, a process, method, system, product, or device that includes a series of operations or units is not limited to the listed operations or units, but optionally also includes operations or units that are not listed, or optionally also includes other operations or units inherent to these processes, methods, products, or devices.

In one aspect, the present disclosure provides a tap detection method for a wearable device. The wearable device may be an ear-clip headphone. In some embodiments, an ear-clip headphone is used as an example for description, but the present disclosure is not limited thereto. For example, the wearable device may also be other types of headphones, such as in-ear headphones, ear-hook headphones, or behind-the-neck headphones. The wearable device may also be smart glasses or a smart watch.

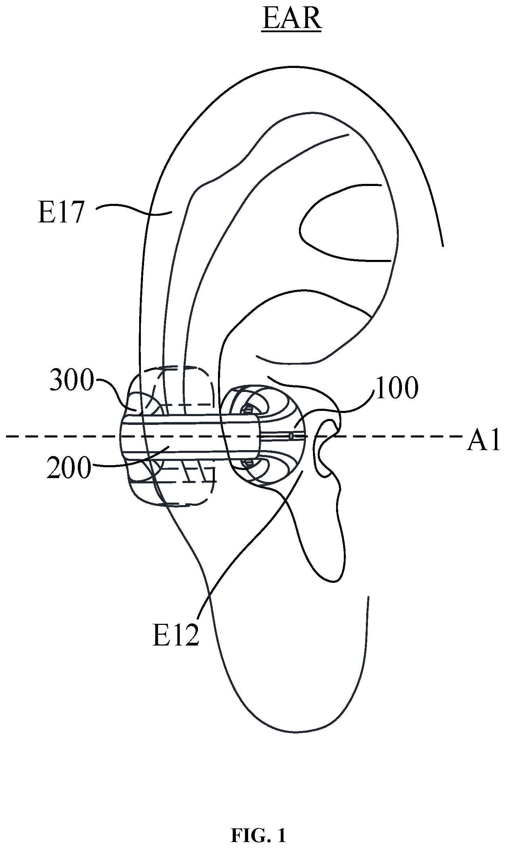

As shown in FIG. 1, FIG. 1 is a schematic diagram illustrating a state of a wearable device worn on an ear of a wearer according to some embodiments of the present disclosure. The wearable device may be an ear-clip headphone 1. As shown in FIG. 1, the headphone 1 includes a sound generating portion 100inserted into a concha cavity E12 of the wearer (or a user), an abutting portion 300 for abutting behind the ear of the wearer, and an ear hook 200 connected between the sound generating portion 100 and the abutting portion 300. In a wearing state, the ear hook 200 may bypass a helix E17 of the wearer. The sound generating portion 100 and the abutting portion 300 form a clamping state on two sides of the helix E17 of the user, and the sound generating portion 100 is located within the concha cavity E12.

The sound generating portion 100 is a sound player. The sound generating portion 100 is configured to convert an electrical signal into a sound signal and play the sound signal to the wearer. The abutting portion 300 and the sound generating portion 100 form the clamping state to clamp and wear the entire headphone 1 on the ear EAR of the user. A detection module may be disposed in the abutting portion 300. The detection module is configured to perform a tap detection.

In some embodiments, the detection module may also be disposed in the sound generating portion 100. The present disclosure is not limited thereto, and a person skilled in the art may make a selection according to actual requirements. In some embodiments, a battery, a circuit board, and other components may be disposed in the abutting portion 300. Certainly, the abutting portion 300 may not include the battery, and the battery may be installed in the sound generating portion 100. This falls within the scope easily understood by a person skilled in the art, and details are not described herein again.

As shown in FIG. 1, the ear hook 200 has a symmetry plane A1 arranged along a length direction of the ear hook 200. Specifically, portions of the ear hook 200 on two sides of the symmetry plane A1 have minimal differences or are consistent. That is, if the ear hook 200 is regularly symmetrical, the portions of the ear hook 200 on the two sides of the symmetry plane A1 are consistent. If the ear hook 200 is not strictly symmetrical, the differences between the portions of the ear hook 200 on the two sides of the symmetry plane A1 should be minimal among various division manners. For example, a projection of the ear hook 200 may be observed on a plane perpendicular to the symmetry plane A1 to distinguish the value of the differences. When the ear-clip headphone is in an ideal wearing state, the symmetry plane A1 may be substantially parallel to a horizontal plane. It should be noted that "substantially parallel" described in the present disclosure allows an error range of plus or minus 15 degrees. It is easily understood that during use by the wearer, the ear-clip headphone may slide under its own gravity, causing the symmetry plane A1 to deviate from the horizontal plane.

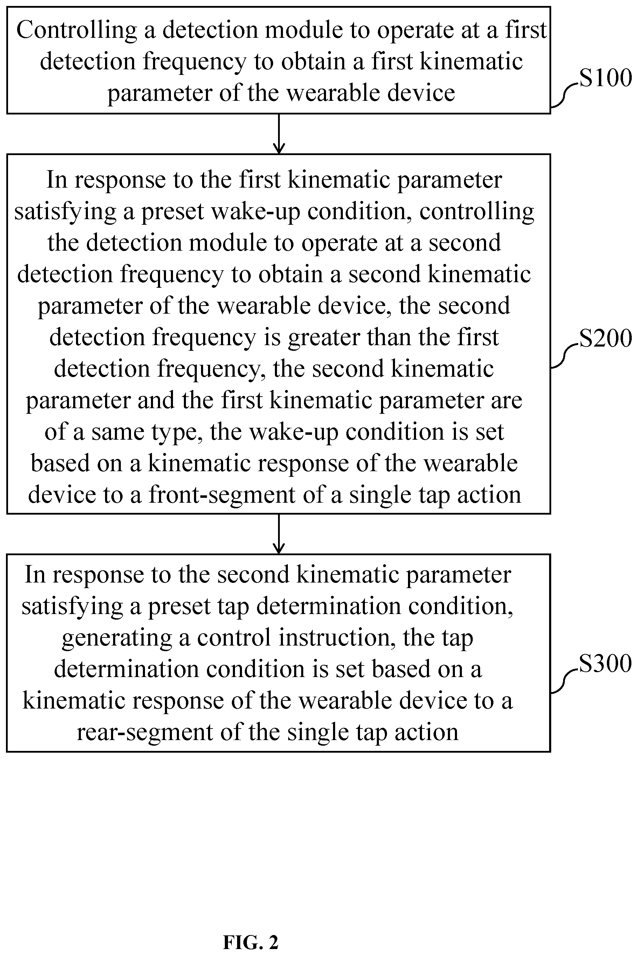

As shown in FIG. 2, FIG. 2 is a flowchart of an exemplary process of a tap detection method for a wearable device according to some embodiments of the present disclosure. The tap detection method may include the following operations.

In S100, a detection module is controlled to operate at a first detection frequency to obtain a first kinematic parameter of the wearable device.

In some embodiments, the detection module may be an acceleration sensor. The acceleration sensor has a built-in spatial coordinate system including an X-axis, a Y-axis, and a Z-axis. The X-axis and the Y-axis may both be substantially parallel to the symmetry plane A1. The Z-axis may be substantially perpendicular to the symmetry plane A1 of the ear-clip headphone. It should be noted that "substantially parallel" and "substantially perpendicular" described in the present disclosure allow an error range of plus or minus 15 degrees. The acceleration sensor may detect acceleration values of the headphone in the X-axis direction, the Y-axis direction, and the Z-axis direction.

In some embodiments, the first kinematic parameter may be a parameter determined based on acceleration values of the headphone in the X-axis direction, the Y-axis direction, and the Z-axis direction. In some embodiments, the first kinematic parameter may also be an acceleration value in a certain direction detected by the acceleration sensor. For example, the first kinematic parameter may be any one of the acceleration values in the X-axis direction, the Y-axis direction, and the Z-axis direction. The present disclosure is not limited thereto, and a person skilled in the art may make a selection according to actual requirements. In some embodiments, the first kinematic parameter may also be a parameter determined based on any two of the acceleration values of the headphone in the X-axis direction, the Y-axis direction, and the Z-axis direction.

The first detection frequency is relatively low. That is, an acquisition frequency of the first kinematic parameter is relatively low. In some embodiments, the first detection frequency may be within a range of 200-350 Hz. For example, the first detection frequency may be 200 Hz, 240 Hz, 280 Hz, 320 Hz, or 350 Hz.

In S200, in response to the first kinematic parameter satisfying a preset wake-up condition, the detection module is controlled to operate at a second detection frequency to obtain a second kinematic parameter of the wearable device. The second detection frequency is greater than the first detection frequency. The second kinematic parameter and the first kinematic parameter are of the same type. The wake-up condition is set based on a kinematic response of the wearable device to a front-segment of a single tap action.

The second detection frequency is greater than the first detection frequency. The second detection frequency is relatively high. That is, an acquisition frequency of the second kinematic parameter is relatively high. In some embodiments, the second detection frequency may be greater than or equal to 400 Hz. For example, the second detection frequency may be 400 Hz, 440 Hz, 480 Hz, 500 Hz, or 550 Hz.

From a machine perspective of the wearable device, when the first kinematic parameter satisfies the preset wake-up condition, it means that a tap action may occur. At this time, the detection module is controlled to operate at the second detection frequency, that is, high-frequency detection is activated. This can accurately detect a vibration waveform generated by the tap action, which is beneficial for improving the accuracy of tap detection.

In some embodiments, the second kinematic parameter and the first kinematic parameter are of the same type. The only difference between the second kinematic parameter and the first kinematic parameter is the acquisition frequency. The first kinematic parameter is obtained at the first detection frequency. The second kinematic parameter is obtained at the second detection frequency. Therefore, the first kinematic parameter and the second kinematic parameter may be collectively referred to as the kinematic parameters of the wearable device.

In some embodiments, the second kinematic parameter and the first kinematic parameter may be obtained based on the same acceleration values using the same calculation manner. In some embodiments, the second kinematic parameter and the first kinematic parameter may also be the same type of acceleration value. The present disclosure is not limited thereto, and a person skilled in the art may make a selection according to actual requirements.

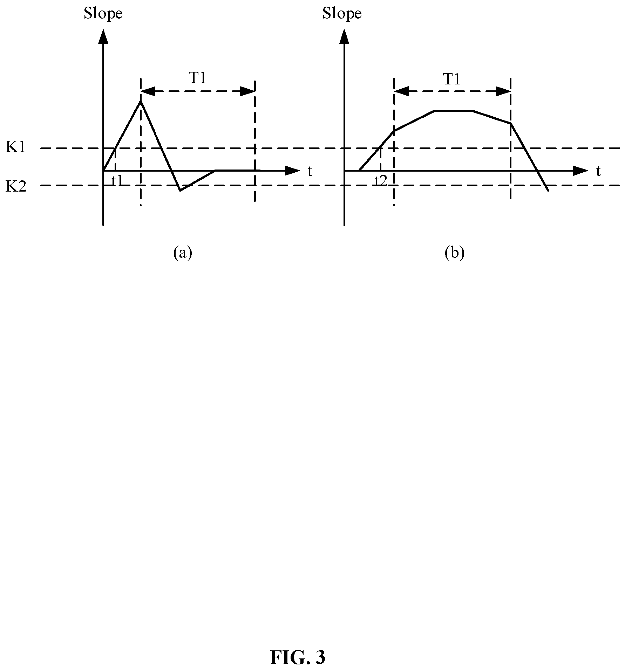

A vibration caused by a single tap action usually lasts for a period of time. As shown in FIG. 3, (a) is a schematic diagram illustrating changes of the kinematic parameter of the wearable device over time when a single tap action occurs. From a time perspective, the single tap action includes a front-segment and a rear-segment. The wake-up condition is set based on a kinematic response of the wearable device to the front-segment of the single tap action.

In some embodiments, the wake-up condition includes: a rate of change of the first kinematic parameter over time reaching a first preset threshold. The first preset threshold is a positive value. The present disclosure does not limit the specific value of the first preset threshold, and a person skilled in the art may make a selection according to actual requirements. When the first kinematic parameter gradually increases over time and the rate of change reaches the first preset threshold, waking up the high-frequency detection is beneficial for reducing the possibility of false wake-up of the high-frequency detection.

Please continue to refer to FIG. 3, (a) and (b) are schematic diagrams illustrating a kinematic parameter of a wearable device changing over time according to some embodiments of the present disclosure, respectively. As shown in (a) of FIG. 3, at time t1, the rate of change Slope of the first kinematic parameter over time reaches the first preset threshold K1, satisfying the wake-up condition, and the high-frequency detection is woken up at the time t1. As shown in (b)of FIG. 3, at time t2, the rate of change Slope of the first kinematic parameter over time reaches the first preset threshold K1, satisfying the wake-up condition, and the high-frequency detection is woken up at the time t2.

In S300, in response to the second kinematic parameter satisfying a preset tap determination condition, a control instruction is generated. The tap determination condition is set based on a kinematic response of the wearable device to the rear-segment of a single tap action.

Based on a machine perspective of the wearable device, when the second kinematic parameter satisfies the preset tap determination condition, it means that a tap action is detected, and a control instruction is generated at this time to perform corresponding control on the wearable device.

In some embodiments, the tap determination condition includes: within a first preset duration, a rate of change of the second kinematic parameter over time exceeding the first preset threshold and falling back below a second preset threshold. The second preset threshold is a negative value. In some embodiments, the first preset duration may be within a range of 30-100 ms. For example, the first preset duration may be 30 ms, 50 ms, 70 ms, 90 ms, or 100 ms. The present disclosure does not limit the specific value of the second preset threshold, and a person skilled in the art may make a selection according to actual requirements. In response to the second kinematic parameter first gradually increasing over time and the rate of change exceeding the first preset threshold, and then gradually decreasing over time and the rate of change being less than the second preset threshold within the first preset duration, determining that a tap action is detected is beneficial for avoiding false detection of the tap action and improving the accuracy of tap detection.

Please continue to refer to (a) of FIG. 3, within the first preset duration T1, the rate of change Slope, of the second kinematic parameter over time exceeds the first preset threshold K1 and falls back below the second preset threshold K2, satisfying the tap determination condition, which means that a tap action is detected. As shown in (b) of FIG. 3, within the first preset duration T1, the rate of change Slope of the second kinematic parameter over time exceeds the first preset threshold K1 but does not fall back below the second preset threshold K2, failing to satisfy the tap determination condition, which means that no tap action is detected.

In related art, to more accurately detect a vibration waveform generated by a tap action, the detection module is configured with a higher detection frequency. However, long-term high-frequency detection results in high power consumption. In the method of the present disclosure, when the first kinematic parameter satisfies the preset wake-up condition, it means that a tap action may occur. At this time, high-frequency detection is activated. Compared with the manner in the related art that continuously uses high-frequency detection, the method of the present disclosure can reduce power consumption, thereby accurately performing tap detection with lower power consumption.

In some embodiments, from a temporal perspective, a single tap action includes a front-segment and a rear-segment. In the method of the present disclosure, the wake-up condition is set based on a kinematic response of the wearable device to the front-segment of the single tap action, and the tap determination condition is set based on a kinematic response of the wearable device to the rear-segment of the single tap action. That is, in the solution of the present disclosure, the wearable device can activate high-frequency detection based on the kinematic response of the single tap action and complete the tap determination.

Since activating high-frequency detection and tap determination may be completed based on the kinematic response of the single tap action, when a user performs a single tap on the wearable device, the wearable device may detect the single tap and execute a first control instruction corresponding to the single tap. When the user performs a double tap on the wearable device, the wearable device may also detect the double tap and execute a second control instruction corresponding to the double tap, where the second control instruction and the first control instruction may be used to perform different controls on the wearable device. In the method of the present disclosure, different count values of taps may be set to correspond to different control instructions, thereby achieving more control functions through tap actions and improving the user experience of interacting with the wearable device.

It should be noted that in the description of the present disclosure, the term "single tap" refers to a user performing only a single tap action within a second preset duration; the term "double tap" refers to a user performing two consecutive tap actions within the second preset duration. In some embodiments, the second preset duration may be within a range of 400-600 ms. For example, the second preset duration may be 400 ms, 450 ms, 500 ms, 550 ms, or 600 ms.

Therefore, in some embodiments, generating the control instruction in response to the second kinematic parameter satisfying the tap determination condition includes: generating a control instruction based on a count value of how many times the second kinematic parameter satisfies the tap determination condition within a second preset duration. Different count values correspond to different control instructions.

For example, the wearable device may be provided with a register for storing the count value of how many times the second kinematic parameter satisfies the tap determination condition within the second preset duration. The count value in the register may be preset to 0. When the second kinematic parameter satisfies the tap determination condition, the count value in the register is incremented by 1, and timing starts. Subsequently, in response to the second kinematic parameter satisfying the tap determination condition, the count value in the register is incremented by 1 until the timing reaches the second preset duration. After the timing reaches the second preset duration, a control instruction may be generated based on the count value in the register, and the count value in the register may be reset to 0.

After the timing reaches the second preset duration, if the count value in the register is 1, a first control instruction corresponding to the single tap may be generated. After the timing reaches the second preset duration, if the count value in the register is 2, a second control instruction corresponding to the double tap may be generated. The second control instruction and the first control instruction are configured to perform different controls on the wearable device.

After each tap action occurs, the generated vibration may cause false detection of a tap. For example, if the user applies a relatively large force when performing a single tap action, the vibration generated by the single tap action may be falsely detected as a second tap action. To avoid this situation, a quiet time window may be set after a tap action is detected. During the quiet time window, the second kinematic parameter is no longer acquired, or the rate of change of the second kinematic parameter is no longer detected.

Therefore, in some embodiments, generating the control instruction based on the count value of the second kinematic parameters that satisfy the tap determination condition within the second preset duration includes: in response to the second kinematic parameter satisfying the tap determination condition, controlling the detection module to stop operating within a third preset duration, or controlling the detection module to not respond to the second kinematic parameter obtained by the detection module.

The third preset duration corresponds to the quiet time window. In some embodiments, the third preset duration may be within a range of 200-400 ms. For example, the third preset duration may be 200 ms, 250 ms, 300 ms, 350 ms, or 400 ms. The third preset duration is less than a fourth preset duration.

Merely by way of example, by controlling the detection module to stop operating, the second kinematic parameter is no longer obtained, so as to avoid false detection caused by the vibration generated by the tap action. Of course, it is also possible to avoid false detection caused by the vibration generated by the tap action by not responding to the second kinematic parameter obtained by the detection module (e.g., by no longer detecting the rate of change of the second kinematic parameter). The present disclosure is not limited thereto, and a person skilled in the art may make a selection according to actual requirements.

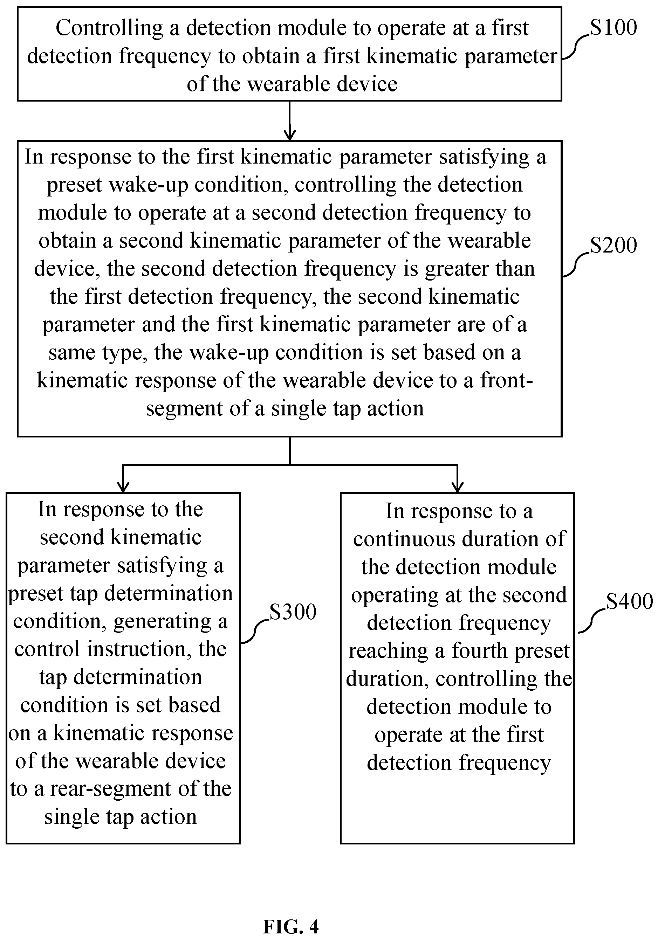

As shown in FIG. 4, FIG. 4 is a flowchart of an exemplary process of a tap detection method for a wearable device according to another embodiment of the present disclosure. After operation S200, the tap detection method may further include the following operations.

In S400, in response to a continuous duration of the detection module operating at the second detection frequency reaching a fourth preset duration, the detection module is controlled to operate at the first detection frequency.

The fourth preset duration may be within a range of 3-7 s. For example, the fourth preset duration may be 3 s, 4 s, 5 s, 6 s, or 7 s. After high-frequency detection continues for the fourth preset duration, an operating frequency of the detection module may be reduced from the second detection frequency to the first detection frequency, to further reduce the power consumption of the wearable device.

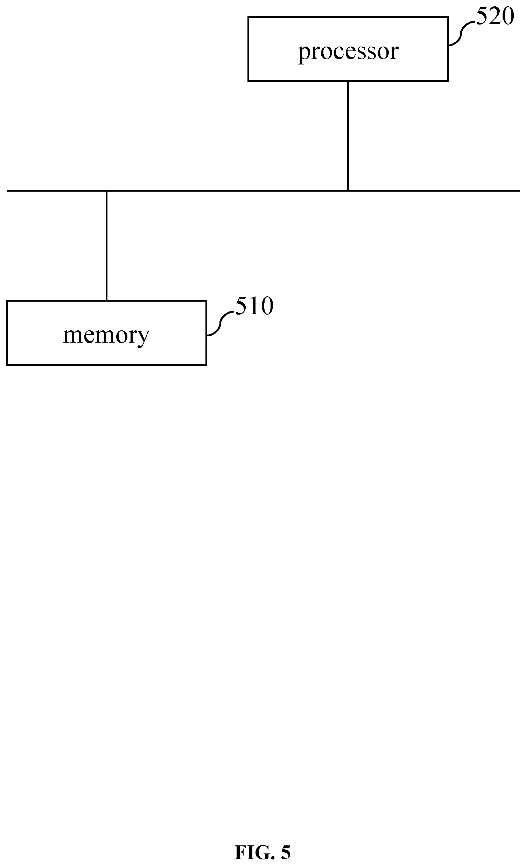

The present disclosure further provides a wearable device 500. Please refer to FIG. 5, FIG. 5 is a schematic diagram illustrating a structure of a wearable device according to some embodiments of the present disclosure. The wearable device 500 includes a memory 510, a processor 520, and a computer program stored in the memory 510 and executable on the processor 520. The processor 520 executes the computer program to implement operations of any one of the tap detection methods described above.

The processor 520 may also be referred to as a Central Processing Unit (CPU). The processor 520 may be an integrated circuit chip having signal processing capability. The processor 520 may also be a general-purpose processor, a digital signal processor (DSP), an application-specific integrated circuit (ASIC), a field-programmable gate array (FPGA) or other programmable logic device, discrete gate or transistor logic device, or discrete hardware component. The general-purpose processor may be a microprocessor, or the processor 520 may also be any conventional processor.

The memory 510 may include a random access memory (RAM), a read-only memory (ROM), a flash memory, an erasable programmable read-only memory (EPROM), an electrically erasable programmable read-only memory (EEPROM), a register, a hard disk, a removable disk, a CD-ROM, etc. The memory 510 may store program data. For example, the program data may include a single instruction or a plurality of instructions, and may be distributed in several different code segments, distributed among different programs, and distributed across a plurality of memories. The memory 510 may be coupled to the processor 520 so that the processor 520 may read/write information from/to the memory 510. Certainly, the memory 510 may be integrated into the processor 520, which is not limited in the present application, and a person skilled in the art may make a selection according to actual requirements.

In the several embodiments provided in the present disclosure, it should be understood that the disclosed tap detection method may be implemented in other manners. For example, the electronic device embodiments described above are merely illustrative. For example, the division of modules or units is only a logical function division. In actual implementation, there may be other division methods. For example, a plurality of units or components may be combined or integrated into another system, or some features may be ignored or not executed. Another point is that the mutual coupling or direct coupling or communication connection shown or discussed may be through some interfaces, and the indirect coupling or communication connection of devices or units may be in electrical, mechanical or other forms.

The units described as separate components may or may not be physically separate, and the components displayed as units may or may not be physical units, that is, they may be located in one place, or may be distributed on a plurality of network units. Some or all of the units may be selected according to actual needs to achieve the purpose of the solutions of the embodiments.

In addition, each functional unit in each embodiment of the present disclosure may be integrated in one processing unit, or each unit may exist physically alone, or two or more units may be integrated in one unit. The above-mentioned integrated units may be implemented in the form of hardware, or in the form of software functional units.

The above are only some embodiments of the present disclosure, and do not limit the protection scope of the present disclosure. Any equivalent device or equivalent process transformation made using the content of the specification and drawings of the present disclosure, or directly or indirectly applied in other related technical fields, are included in the patent protection scope of the present disclosure.

## Claims

1. A tap detection method for a wearable device, comprising:
controlling a detection module to operate at a first detection frequency to obtain a first kinematic parameter of the wearable device;
in response to the first kinematic parameter satisfying a preset wake-up condition, controlling the detection module to operate at a second detection frequency to obtain a second kinematic parameter of the wearable device, wherein the second detection frequency is greater than the first detection frequency, and the second kinematic parameter and the first kinematic parameter are of a same type, wherein the wake-up condition is set based on a kinematic response of the wearable device to a front-segment of a single tap action;
in response to the second kinematic parameter satisfying a preset tap determination condition, generating a control instruction, wherein the tap determination condition is set based on a kinematic response of the wearable device to a rear-segment of the single tap action.

2. The detection method according to claim 1, wherein the wake-up condition comprises: a rate of change of the first kinematic parameter over time reaching a first preset threshold, and the first preset threshold is a positive value.

3. The detection method according to claim 2, wherein the tap determination condition comprises: within a first preset duration, a rate of change of the second kinematic parameter over time exceeding the first preset threshold and falling back below a second preset threshold, and the second preset threshold is a negative value.

4. The detection method according to claim 1, wherein the generating the control instruction in response to the second kinematic parameter satisfying the tap determination condition comprises:
generating the control instruction based on a count value of how many times the second kinematic parameter satisfies the tap determination condition within a second preset duration, wherein different count values correspond to different control instructions.

5. The detection method according to claim 4, wherein the generating the control instruction based on the count value of the second kinematic parameters that satisfy the tap determination condition within the second preset duration comprises:
in response to the second kinematic parameter satisfying the tap determination condition, controlling the detection module to stop operating within a third preset duration, or controlling the detection module to not respond to the second kinematic parameter obtained by the detection module.

6. The detection method according to claim 5, wherein the second preset duration is within a range of 400-600 ms, and the third preset duration is within a range of 200-400 ms.

7. The detection method according to claim 4, wherein after the controlling the detection module to operate at the second detection frequency to obtain the second kinematic parameter of the wearable device in response to the first kinematic parameter satisfying the preset wake-up condition, the detection method further comprises:
in response to a continuous duration of the detection module operating at the second detection frequency reaching a fourth preset duration, controlling the detection module to operate at the first detection frequency.

8. The detection method according to claim 1, wherein the first detection frequency is within a range of 200-350 Hz, and the second detection frequency is greater than or equal to 400 Hz.

9. The detection method according to claim 1, wherein the detection module is an acceleration sensor, and the first kinematic parameter and the second kinematic parameter are acceleration values detected by the acceleration sensor or parameters calculated based on the acceleration values.

10. A wearable device, comprising a processor and a memory, wherein the memory stores a computer program, and the processor is configured to execute the computer program to implement a detection method according to any one of claims 1-9.
